# EUROPEAN PATENT APPLICATION

(11) **EP 4 474 135 A1**
(43) Date of publication of application: **11.12.2024**
(21) Application number: 24180412.9
(22) Date of filing: 06.06.2024
(51) Int. Cl.: B29C 64/135, B22F 10/12, B22F 12/49, B29C 64/268, B29C 64/371, B33Y 30/00

(54) **STEREOLITHOGRAPHIC MODULE FOR VACUUM SYSTEMS**

(30) Priority: 07.06.2023 SK 500382023 U
(71) Applicant: Elektrotechnicky ustav Slovenskej akademie vied Verejna vyskumna institucia, 841 04 Bratislava-Karlova Ves (SK); Bizzcom s.r.o., 919 28 Bucany (SK)
(72) Inventor: Hudec, Boris, 841 02 Bratislava (SK); Zelenay, Martin, 921 01 Piestany (SK); Kurbel, Matej, 926 01 Sered (SK); Gucmann, Filip, 821 08 Bratislava (SK); Tapajna, Milan, 900 31 Stupava (SK)
(74) Representative: Majlingová, Zuzana

(57) **Abstract**

A stereolithography module (1) for a vacuum system comprising a vacuum-compatible container (2) provided with a first flange (3a) adapted to be connected to the vacuum system and a second flange (3b) fitted with a viewport (4) adapted to allow the passage of a laser beam; and wherein the container (2) houses a laser optics for focusing and X-Y scanning the laser beam, and wherein the laser optics comprises an input lens (5), a laser scanning optics (6) and a telecentric or F-theta focusing lens (7); and wherein the module (1) further comprises a control unit (9) adapted to control the laser scanning optics (6).

## Description

### Technical Field

The invention relates to vacuum techniques, film (layer) deposition, vacuum 3D printing, film removal, and in particular to a stereolithography module for use in thin film preparation and modification methods.

### Background Art

Stereolithography (SLA) is an additive manufacturing process traditionally used in 3D printing that produces reliable macroscopic prototypes, designs and products from CAD drawings, layer by layer. The material is typically a photosensitive resin that polymerizes under the influence of a UV laser beam that scans the surface of the liquid resin bath in pre-programmed X-Y coordinates for the layer. The cured (irradiated) portion is then advanced a small step in the Z-axis direction and the process is repeated with another layer, as described e.g. in [US5133987A] and in [US9452567B2].

Conventionally, in the fabrication of microscopic objects such as microchips, semiconductors, microscopic circuits, solar cells, MEMS sensors, and others, the desired material is first deposited as an ultra-thin film of the required thickness (typically units to hundreds of nanometres) over the entire substrate using a variety of thin-film deposition methods, most of which require a vacuum and elevated temperature for the process. Patterning the film is then performed in subsequent steps by a process called photolithography and subsequent etching.

The current state of the art does not, according to the information available to us, provide a technology that allows local deposition of ultra-thin films or local removal of material inside a vacuum system using controlled laser irradiation of the substrate.

The closest to the solution according to the present invention is the stereolithography technology, which is used in 3D printing of macroscopic objects by laser-activated curing of a suitable resin [US5133987A], but it cannot be directly used in a vacuum or in photolithography [WO1991010170A1]. Also related is the current technology of spatially resolved vacuum deposition or material removal, which typically uses a fixed (unchanging) mask, e.g., photolithographic, which consists of a glass plate covered with a sculpted metal layer [P. R. Chalker, et al. AIP Advances 5, 017115 (2015) DOI: 10 1063-1-4905887

The present invention enables the use of a stereolithography system for thin-film processing in existing vacuum process equipment, thus significantly expanding its capabilities. It also addresses the spatially-resolved deposition or removal of layers of materials without the need to use photo-resist or e.g. metal or photolithographic masks to cover those parts of the modified object that are not to be affected by the process.

### Summary of Invention

A stereolithography module for vacuum systems according to the present invention comprises a vacuum-compatible container provided with a first flange adapted for connection to the vacuum system and a second flange provided with a viewport adapted for the passage of a laser beam; and wherein the container houses a laser optics for focusing and X-Y scanning the laser beam, and wherein the laser optic comprises an entrance lens, a laser scanning optics, and a telecentric or F-theta lens; and wherein the module further comprises a control unit adapted to control the laser scanning optics.

The first flange is used for the vacuum-tight connection to the flange of the vacuum system. This joint allows the inside of the module to become part of the existing vacuum system. The main advantage of this solution is that there is no viewport between the focusing optics and the illuminated object inside the existing vacuum system, which would cause unwanted defocusing of the laser. Moreover, if the existing vacuum system is heated due to the technological process taking place inside (which is almost a rule in practice for thin film deposition), this viewport would be affected by a temperature gradient causing a blurring that would be almost impossible to compensate for in practice.

The second flange is used to fit a viewport that is vacuum sealed and also transparent to the wavelength of the laser used. The advantage of the second flange is that the viewport can be easily changed as per the need - the source used. This viewport is used for the laser beam to enter the stereolithography module. Alternatively, the stereolithography module according to the present invention does not comprise a second flange and instead the viewport is mounted directly in the wall of the container.

According to a preferred embodiment, the first flange is positioned in one wall of the container and the second flange/viewport is positioned on the opposite wall of the container.

Alternatively, an additional viewport can also be fitted in the first flange (to separate the stereolithography module from the vacuum system). The advantage of this arrangement is the possibility to operate the module filled with e.g. an inert gas, regardless of what vacuum or gases are present in the vacuum system/vacuum chamber.

If the first flange does not include a second viewport and the container is connected to the vacuum system directly, it is preferred that the container is provided with at least one inert gas inlet port, with the flow rate controlled via a mass flow controller (MFC), controlled by the control unit. This inert gas serves as a so-called gas curtain to protect the internal components of the module (mirrors and other components of the module that are contained in the container) from potential fumes or chemicals from the vacuum system to which the stereolithography module is connected. This is not necessary if high vacuum is used in the vacuum system. Conversely, it is desirable when low vacuum is used in the vacuum system, which is typical for many deposition processes (e.g. CVD, ALD). The flow rate of this inert gas is controlled by the MFC which is operated via a control unit. The flow rate of the inert gas (typically nitrogen or argon) is adjusted so that the pressure inside the container is slightly higher than in the vacuum system, thus achieving a so-called gas curtain effect, whereby the inert gas molecules prevent the gas molecules present in the system from diffusing into the interior of the module, thus protecting its components from potential unwanted chemical effects such as deposition, etching or corrosion.

The use of a gas curtain, without any additional window/viewport between the laser focusing optics inside the module and the illuminated object inside the system, makes it possible to achieve maximum laser focus on the object and thus the best possible resolution, limited only by the wavelength of the laser radiation used.

It is advantageous if the flanges, viewports and ports are standardized for vacuum systems.

According to a preferred embodiment, the stereolithography module according to the present invention may also include a laser source. The laser source can be placed inside the container or outside the container. The laser source can have a steady or pulsed optical output. The laser source is controlled by a control unit. The stereolithography module may also contain multiple laser sources, which may be of different wavelengths, and have independent control of each other.

The laser source(s) may be mounted outside the container such that in the on state, the laser beam passes through a viewport into the container, passes through the laser optics, and exits the container into the vacuum system through the first flange.

Alternatively, the laser source(s) may be mounted in the container such that in the on state the laser beam passes through the laser optics and exits the container into the vacuum system through the first flange. In this case, the viewport in the second flange can be replaced by a blanking or the entire second flange can be removed (replaced by the container wall).

Laser optics is used to focus and scan the laser beam. The laser optics should include, at a minimum, an entrance lens (preferably a plano-convex lens), a laser scanning optics, and a telecentric or F-theta lens. In addition, the laser scanning optics may include a system of two galvanometric scanning mirrors one for the X-direction and the other for the Y-direction. These mirrors are positionable - with a controllable tilt to allow the laser beam to be directed appropriately.

According to a preferred embodiment, the stereolithography module may include a sensor for the position of the laser beam on the object to be processed. The sensor can be located inside or outside the module container. The sensor can be, for example, a digital camera. The sensor is used to optically control the position of the laser light on the object in the vacuum system. If necessary, it can be equipped with a visible light source (e.g. laser or LED) that is directed at the object to be machined. The sensor is controlled by the control unit.

Alternatively, the container may also contain a port for connecting a vacuum pump, for the possibility of differential pumping.

The control unit of the stereolithography module may preferably be directly the control unit of the respective vacuum system, alternatively the control unit of the stereolithography module may be interfaced with and communicate with the control unit of the vacuum system.

According to a preferred embodiment, the stereolithography module comprises a vacuum-compatible container comprising laser optics for focusing and scanning the beam, a beam position sensor on an object inside the vacuum system (e.g. camera), an inert gas inlet controlled by a flow meter (MFC, mass flow controller) and a control system with a software that controls and is connected to the components: the external laser, scanning optics - i.e. galvanometric scanning X-Y mirrors, beam position sensor/camera, flowmeter of the gas supply. The control system can communicate with the process control in an existing vacuum system.

A particular stereolithography module is designed, assembled and calibrated to a laser source of a particular wavelength. A laser source of the desired wavelength, which may or may not be part of the stereolithography module, shines into the module through a suitable viewport, where the laser beam is further directed through a system of optical lenses and mirrors suitable for the wavelength of the laser used. The system preferably comprises an input lens (e.g., a plano-convex lens), then at least one galvanometric mirror, preferably a system of two, for the X- and Y-direction with a controllable tilt for directing the laser beam, and may also comprise a telecentric, or F-Theta, lens that parallelises the directed laser beam with the direction of the zero-tilt beam. The optical system can contain multiple lenses if required.

The stereolithography module, according to the present invention, allows direct connection to vacuum systems via a standardized interface, while allowing a technology known as stereolithography, which is the programmable scanning of a laser beam, to be applied to an object inside the vacuum system for the purpose of modifying that object.

This solution enables technological operations in vacuum systems to be carried out at selected locations without the need to use lithographic processes. The use of a stereolithography module, according to the present invention, enables highly scalable deposition or material removal processes that can utilize laser light. The processes result in films that are directly shaped, requiring no further lithography or shaping. It is also possible to dynamically change the pattern projected by the laser between exposure cycles during the process, making it possible to create different shapes and gradients on the substrate, which is unattainable with conventional methods using masks.

The advantage of this solution is its multipurpose nature, i.e. the possibility to use the module with various existing deposition/removal techniques; compatibility - the possibility to connect the module to existing technological equipment; there is no need for the production of physical masks or the application of different polymer or metal layers; the possibility of using the described methods in vacuum systems; the highest achievable resolution on the substrate is determined by the wavelength of the laser light used and other factors such as optics, viewport, purity of the gas atmosphere / vacuum, but sub-micrometre resolution is still achievable.

The key advantages of this solution include its modularity, due to the use of standardized flanges and the use of an external laser source. The module according to the present invention serves as an interface that allows users to utilize any laser of their preference operating under normal laboratory conditions in air, and to focus this laser on and scan with it an object inside an existing vacuum system through a standardized flange.

### Brief Description of Drawings

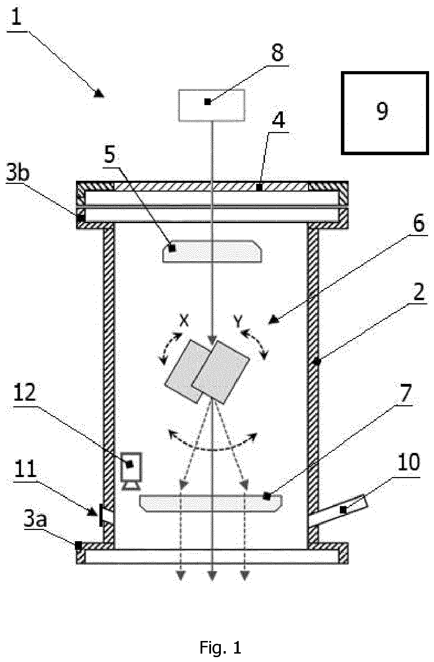

Figure 1 shows a stereolithography module for vacuum systems according to the present invention.

### Examples

The stereolithography module 1 illustrated in Figure 1 comprises a vacuum-compatible container 2 containing laser optics for focusing and scanning the beam. Container 2 is equipped with standardized flanges on the two opposite walls of the top and bottom - the first and second flange 3a, 3b type NW50KF or NW50CF. Both joints are fitted with a suitable gasket (O-ring) and a clamp or bolts and nuts located around the perimeter of both flanges. In the second flange 3b, a viewport 4 is provided through which the laser beam enters the container 2. The focused laser beam exits the container 2 through the first flange 3a, which does not contain a viewport, and through which the module 2 is directly connected to the existing vacuum system. In the container 2 there is housed the laser optics for focusing and scanning the beam comprising an input lens 5, which is a plano-convex lens, a laser scanning optics 6 in the form of a system of two galvanometric scanning mirrors, one for the X direction and the other for the Y direction, and a telecentric lens 7. The module 1 also comprises a control unit 9 with software, which is located outside the container 2. The figure also shows the laser source 8 stored outside the container 2. The container 2 is also equipped with a standardized VCR port 10 for supplying a controlled flow inert gas, a standardized VCR port 11 for connecting a vacuum device, and a sensor 12 for sensing the position of the laser beam on the object to be worked on, which is a camera. A control unit 9 with software is used to control and operate the laser source 8, the laser scanning optics 6, the inert gas flow, the vacuum device, the sensor 12 of the position of the laser beam on the object to be processed. The control unit 9 is located outside the container 2 and is electrically connected to the controlled devices. The control unit 9 can also communicate with the process control of an existing vacuum system.

### Stereolithography module mode of operation

Similarly to stereolithography in additive manufacturing of macroscopic objects, the use of this module assumes its mode of operation is based on exposure cycles, i.e. individual pre-programmed sequences where the laser shines on the object inside the vacuum system where the beam follows a pre-programmed trajectory that may be unique for each cycle.

### Example of one exposure cycle:

The operation of the stereolithography module 2 is controlled by the control unit 9 with control software. Prior to the actual process, the operator or the algorithm of the control unit 9 checks the position of the laser beam on the object to be processed and a sensing of the system is performed.

Subsequently, the control unit 9 receives information from the process control in the existing vacuum system that a laser exposure to the object is desired, that is, an exposure cycle is desired. The control unit 9 switches on the laser source 8 and, where appropriate, unshields the aperture of the laser source and sends the pre-programmed sequence to the control of the galvanometric scanning mirror system. The laser beam, based on the pre-programmed sequence on the object, describes a defined trajectory, according to the set parameters such as the speed of the laser trace on the object, the dwell time at the defined locations, the laser intensity or the number of laser pulses, the type of light - pulsed or steady beam.

Once the exposure cycle is complete, the control unit 9 can communicate with the process control in the existing vacuum system to enable the next process operation. Alternatively, the vacuum system may start the next process operation automatically after a preset time longer than the exposure cycle time has elapsed.

### Industrial applicability

The module can be used in thin film deposition or etching technologies, where by illuminating pre-programmed areas on the object (substrate) to be processed, it allows to modify these areas with laser radiation, which can have different effects according to the specific technological process, such as selective deposition, selective etching, selective annealing (by laser), change of phase or change of chemical bonds on the irradiated areas, and others... An advantage of this module is its versatility; it can be connected to technological devices that were not designed to use it.

A module according to the present invention may find application, for example, in microelectronics and enable local chemical vapor deposition (CVD), local atomic layer deposition (ALD) or local etching, local phase change induced by elevated temperature, local disruption of the structure of a material, its evaporation, etc. It can also find applications in, for example, metallurgy, where it can be used, for example, for local sintering of materials, or local soldering/welding. The module can also find applications outside of vacuum apparatus to create various markings and labels on products or packaging made of different materials.

### List of reference number:

1 Stereolithography module
2 container
3a first flange
3b second flange
4 viewport
5 input lens
6 laser scanning optics
7 telecentric or F-theta focusing lens
8 laser source
9 control unit
10 inert gas inlet port
11 port for connection of vacuum equipment
12 laser beam position sensor

## Claims

1. A stereolithography module (1) for vacuum systems, **characterized in that** it comprises a vacuum-compatible container (2) provided with a first flange (3a) adapted to be connected to the vacuum system and a second flange (3b) fitted with a viewport (4) adapted for the passage of a laser beam; and wherein the container (2) houses a laser optics for focusing and X-Y scanning the laser beam, and wherein the laser optics comprises an input lens (5), a laser scanning optics (6) and a telecentric or F-theta lens (7); and wherein the module (1) further comprises a control unit (9) adapted to control the laser scanning optics (6).

2. The stereolithography module (1) according to claim 1, **characterized in that** the second flange (3b) with the viewport (4) is replaced by an integrated wall provided with the viewport (4) adapted for the passage of the laser beam.

3. The stereolithography module (1) according to claim 1 or 2, **characterized in that** it comprises at least one laser source (8) having a steady or pulsed optical output, and wherein the control unit (9) is adapted to control the laser source.

4. The stereolithography module (1) according to claim 3, **characterized in that** the laser source (8) is arranged outside the container in such a position that, in the on state, the laser beam passes through the viewport (4) into the container (2), passes through the laser optics and exits the container (2) through the first flange (3a).

5. The stereolithography module (1) according to claim 3, **characterized in that** the laser source (8) is arranged in the container (2) in such a position that, in the on state, the laser beam passes through the laser optics and exits the container (2) through the first flange (3a).

6. The stereolithography module (1) according to claim 5, **characterized in that** the second flange (3b) fitted with the viewport (4) is replaced by a blanked flange or a wall integrated with the container.

7. The stereolithography module according to any one of the preceding claims, **characterized in that** the first flange (3a) is provided with a second viewport or the container (2) is provided with at least one inert gas inlet port (10) for controlled flow of inert gas, wherein the control unit (9) is adapted for controlling the flow of inert gas, wherein the inert gas inlet port (10) is preferably standardized.

8. The stereolithography module according to any one of the preceding claims, **characterized in that** the container (2) is equipped with a port (11) for connecting a vacuum pump, wherein the port (11) for connecting the vacuum device is preferably standardized.

9. The stereolithography module according to any one of the preceding claims, **characterized in that** the input lens (5) is a plano-convex lens.

10. The stereolithography module according to any one of the preceding claims, **characterized in that** the laser scanning optics (6) comprises a system of two galvanometric scanning mirrors, with programmable beam deflection in the X-Y direction.

11. The stereolithography module according to any one of the preceding claims, **characterized in that** it comprises a laser beam position sensor (12) on the object to be worked on, located in or outside the container (2), and wherein the control unit (9) is adapted to control the laser beam position sensor (12).

12. The stereolithography module according to any one of the preceding claims, **characterized in that** the first flange (3a) and the viewport (4) are arranged on opposite walls of the container (2) or on adjacent sides of the container arranged at a 90° angle.

13. The stereolithography module according to any one of the preceding claims, **characterized in that** the first flange (3a) and/or the second flange (3b) and/or the viewport (4) are standardized for vacuum systems.

14. The stereolithography module according to any one of the preceding claims, **characterized in that** the control unit (9) is a vacuum system control unit.
